# EUROPEAN PATENT APPLICATION

(11) **EP 4 523 773 A1**
(43) Date of publication of application: **19.03.2025**
(21) Application number: 23197202.7
(22) Date of filing: 13.09.2023
(51) Int. Cl.: B01D 3/02, B01D 5/00

(54) **SOLVENT RECOVERY SYSTEM**

(71) Applicant: Qlip N.V., 7202 CM Zutphen (NL)
(72) Inventor: SCHAAFSMA, Michiel, 7202 CM Zutphen (NL)
(74) Representative: V.O.

(57) **Abstract**

The invention is in the field of recovery of evaporated solvent. In particular the present invention is directed to a method and system for solvent recovery.

Provided is a method for recovery of evaporated solvent, comprising the steps of:
- providing in an evaporation chamber an open container comprising a liquid solution, the solution comprising one or more solvents;
- heating the solution, thereby evaporating one or more of the solvents;
- providing in the evaporation chamber one or more cold surfaces, allowing the evaporated one or more solvents to condense on said surface, wherein the one or more cold surfaces are located inside the evaporation chamber such that flow of condensed solvent back into the open container is prevented; and
- collecting the condensed solvent.

## Description

### BACKGROUND OF THE INVENTION

The invention is in the field of recovery of evaporated solvent. In particular the present invention is directed to a method and system for solvent recovery.

A well-known method for determining the fat content in milk is the Röse-Gottlieb method. In this method, fat is extracted from a milk sample using a mixture of one or more solvents. Subsequently, the one or more solvents are evaporated, and the amount of fat is determined gravimetrically.

In order to facilitate easy evaporation of the solvents after extraction, solvents with a low boiling point are typically used. For instance, ethyl ether is often used together with n-pentane, n-hexane, and/or petroleum ether. These and other solvents that are typically used in the Röse-Gottlieb method are highly flammable and can also be harmful for the health and the environment.

Typically, in order to evaporate the solvents, a number of open containers with dissolved extracted fat are heated on a heating plate, and the evaporated solvents are extracted using an exhaust hood above the heated containers or by placing the heating plate in a fume hood. Subsequently, the evaporated solvents are often exhausted into the atmosphere, which is unwanted. In recent decades, environmental and climate protection and workplace safety have become increasingly important. Therefore, there is a need for a method in which evaporated solvents are not exhausted into the atmosphere, but are recovered so that they can be handled or disposed of responsibly.

A known device for recovering evaporated gas is a rotary evaporator, in which a vacuum pump, condenser, and a cold trap are used to collect the evaporated gases. However, rotary evaporators have a number of disadvantages, making them less suitable for recovery of solvents, especially when working with routine measurements for which it is desired to process large batches of samples. First of all, rotary evaporators have many moving parts, e.g. for rotating the flask and for applying vacuum, which makes the equipment expensive, and sensitive for wear and maintenance. Secondly, rotary evaporators are typically used with laboratory glassware which needs to be cleaned thoroughly between every sample, which makes running many samples cumbersome and expensive.

Also, in rotary evaporators or in other systems where evaporated solvents are recovered by means of condensation, there is often a possibility that small amounts of condensed solvent flow back into the container from which the solvent was evaporated, especially when the exhaust and/or condenser are located above the container from which the solvent was evaporated. This can, especially when solvent is evaporated from multiple containers simultaneously, lead to unwanted contamination or cross-contamination of the samples. In case of quantitative measurements, for instance determination of fat content in milk, such contamination means that the measurements may become invalid.

Another challenge when recovering solvents that have low boiling points is that the condensed solvents are prone to re-evaporating after condensation.

An object of the present invention is to provide a method and system for the recovery of solvents that solves one or more of the problems mentioned above. It is also an object of the invention a method and system for the recovery of solvents that is effective, convenient, cost-effective and/or reliable compared to existing methods.

### BRIEF SUMMARY OF THE INVENTION

The inventors have found that at least some of the above-mentioned objectives can be met when condensation of evaporated solvents vertically above the opening of a container from which solvents are evaporated is prevented. In this way, the risk of contamination of samples from condensed solvent flowing or dripping back into the container is minimized. Furthermore, by performing the method in an evaporation chamber and by relying on the pressure drop resulting from condensation of the evaporated solvents as driving force for the flow of evaporated solvent away from the container, there is less need for active suction of the evaporated solvent, making the method and system safe, convenient and the equipment less prone to failure or wear than known methods.

The inventors also found that because the solvent vapors do not escape from the evaporation chamber, it is not necessary to perform the method in a fume hood or under an extractor fan in order to recover the evaporated solvents and prevent them from entering the environment.

Therefore, in accordance with a first aspect of the invention there is provided a method for recovery of evaporated solvent, comprising the steps of: - providing in an evaporation chamber an open container comprising a liquid solution, the solution comprising one or more solvents; - heating the solution, thereby evaporating one or more of the solvents; - providing in the evaporation chamber one or more cold surfaces, allowing the evaporated one or more solvents to condense on the one or more cold surfaces, wherein the one or more cold surfaces are located inside the evaporation chamber such that flow of condensed solvent back into the open container is prevented; and - collecting the condensed solvent.

According to a second aspect of the invention, there is provided a system for recovery of evaporated solvent, suitable for use in the method according to the first aspect of the invention, the system comprising: - an evaporation unit configured for holding an open container comprising a solution and configured for heating said container; - a cooling unit; - an evaporation chamber which forms a fluid connection between the evaporation unit and the cooling unit; and - an outlet for collecting condensed solvent; wherein the cooling unit comprises one or more coolable surfaces facing the inside of the evaporation chamber, and wherein the one or more coolable surfaces are located inside the evaporation chamber such that, in use, flow of condensed solvent back into the open container is prevented.

### BRIEF DESCRIPTION OF THE DRAWINGS

Figure 1 is a schematic representation of the position of cold surfaces relative to the position of an open container.
Figure 2 is a schematic representation of the operating principle of the method and system for recovery of a solvent.
Figure 3 shows a solvent recovery system.
Figure 4 shows a cross-section of a solvent recovery system.
Figure 5 shows a modular solvent recovery system comprising four evaporation units and four cooling units.

### DETAILED DESCRIPTION OF THE INVENTION

According to a first aspect of the invention there is provided a method for recovery of evaporated solvent, comprising the steps of: - providing in a chamber an open container comprising a liquid solution, the solution comprising one or more solvents; - heating the solution, thereby evaporating one or more of the solvents; - providing inside the chamber one or more cold surfaces, allowing the evaporated one or more solvents to condense on said one or more cold surfaces, wherein the one or more cold surfaces are located inside the chamber such that flow of condensed solvent from the one or more cold surfaces into the open container is prevented; and - collecting the condensed solvent.

The open container has one or more openings. Preferably, the open container has at least one opening at the top, in order to enable solvents to easily flow out of the open container. As used herein, the top of the open container is defined as the side of the is facing upwards (*i.e.,* opposite the direction of gravity) when performing the method as described herein.

Preferably, the open container has high thermal conductivity, in order to facilitate quick heating of the solution. In embodiments, the open container is a metal container. In embodiments, the open container is disposable, meaning that cleaning of the container between samples is not needed, and cross contamination between samples can be avoided.

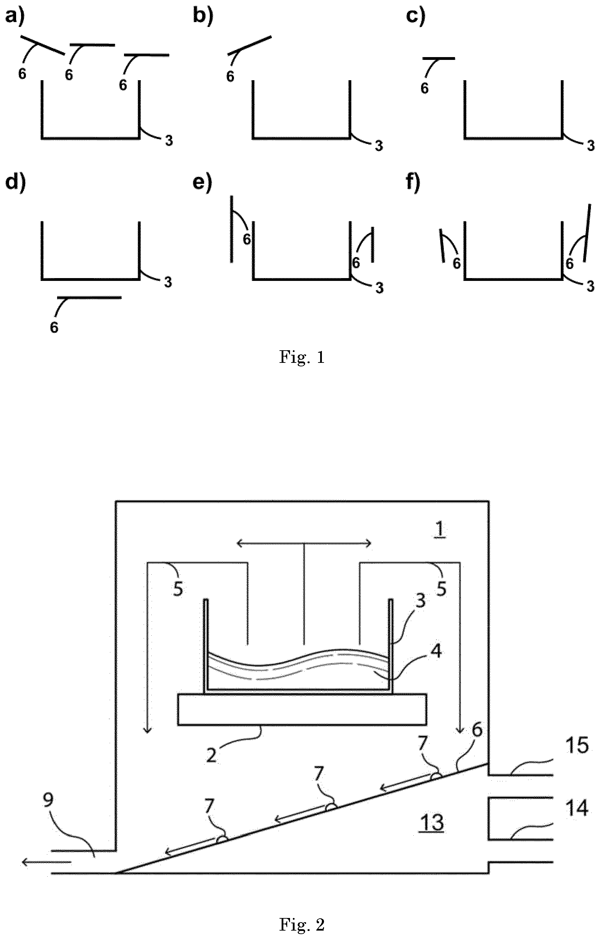

The one or more cold surfaces are located inside the evaporation chamber in a such a way that flow of condensed solvent one or more cold surfaces into the open container is prevented. Examples of possible placement of cold surfaces relative to the open container are given in figure 1.

For instance, if a portion of the one or more cold surfaces is in use located vertically above the opening of the open container, drops of condensed solvent could drip back from such a cold surface into the open container, possibly leading to contamination of the liquid solution and/or inefficient evaporation and recovery of the one or more solvents. Figure 1a show cold surfaces (6) of which a portion is located vertically above the opening of open container (3), which might lead to contamination and is therefore less preferred.

Preferably, the one or more cold surfaces do not extend to a location that is vertically above an opening of the open container. In this way, during execution of the method, dripping of solvent from the one or more cold surfaces into the open container can be prevented. Examples of cold surfaces (6) that do not extend to a location that is vertically above an opening of open container (3) are shown in figure 1c-1f.

However, even if a portion of the one or more cold surfaces is located vertically above a top opening of the container, flow of condensed solvent back into the open container may still be prevented when such a cold surface slopes downwards towards a low point that is not vertically above a top opening of the container. Figure 1b shows an example of a cold surface (6), a portions of which is located vertically above open container (3), and wherein the cold surfaces slope downwards towards a low point that is not located vertically above a top opening of the open container (3). In such a configuration, due to gravity, drops of condensed solvent are more likely to flow towards the low point of the cold surface that is not located vertically above a top opening of open container (3) before dripping off. This means that in such a configuration, contamination can be prevented, even though a portion of the one or more cold surfaces is located vertically above a top opening of the container. Therefore, in case a portion of one or more cold surfaces is located vertically above a top opening of the open container, these one or more cold surfaces preferably slope downwards to a low point of the cold surface that is not vertically above a top opening of the container.

In embodiments, the one or more cold surfaces (6) are located to the sides and/or below the open container (3), see for example figure 1c-1f.

Cold surface, as used herein, refers to a surface that is cold enough for the evaporated solvents to condense. The desired temperature of the cold surfaces depends *inter alia* on the pressure inside the evaporation chamber, and the boiling point of the solvents.

The one or more cold surfaces may for instance be cooled by bringing them in heat exchanging contact with a cooling fluid. Additionally or alternatively, the one or more cold surfaces can be cooled by using thermoelectric cooling, for instance using a Peltier device.

Collecting the condensed solvent can be done by extracting the condensed solvent from the evaporation chamber through one or more outlets. After extracting the condensed solvent from the evaporation chamber, it can for instance be stored in a cold trap.

The outlet for extracting condensed solvent is preferably located below the bottom of the open container, preferably at the lowest point of the evaporation chamber, making it easy for the condensed solvent to exit through the outlet under the influence of gravity.

The outlet for extracting condensed solvent is preferably located adjacent to a cold surface, thereby preventing re-evaporation of the condensed solvent when the solvent flows towards the outlet. In preferred embodiments, the outlet itself is also cooled.

Apart from one or more outlets that may be present for collecting condensed solvent, the evaporation chamber is preferably closed, *i.e.* gastight, meaning that uncontrolled escaping of evaporated solvent does not occur. In that way, as much as possible of the evaporated solvent can be recovered, thereby preventing evaporated solvents, which may be harmful or flammable to end up in the surrounding atmosphere.

The method according to the invention is especially suitable for use in the Röse-Gottlieb method or other methods for determining the fat content of food products. Therefore, the method and system according to the invention are optimized for the specific conditions used in methods for determination of fat content of milk and/or dairy products. In embodiments, the solution further comprises solute, preferably edible oil and/or fat. More preferably, the solution comprises dairy fat, such as milk fat.

Many different types of solvents or mixtures of solvents can be recovered using the method according to the invention. Depending on the nature of the solution being used, the method according to the invention can be used for recovering one or more organic solvents, one or more inorganic solvents, or a combination of organic and inorganic solvents.

In case of a solution of edible oil and/or fat, the one or more solvents typically comprise one or more organic solvents.

The boiling point of the one or more solvents is preferably sufficiently far removed from the boiling point of any solute that the solution may contain. Preferably, the one or more solvents should not have a too high boiling point and/or a too low vapor pressure at room temperature, because this makes it difficult to evaporate the solvents. However, a too low boiling point and/or too high vapor pressure may make it difficult to condense the one or more solvents. The choice of one or solvents with certain physical properties such as polarity and boiling point may depend on the system and desired rate of evaporation. In embodiments, the one or more solvents have a standard boiling point of 20-120 °C, preferably 25-100 °C, such as 30-80 °C.

In embodiments, the liquid solution comprises one or more organic solvents, preferably selected from diethyl ether, petroleum ether, pentane, dichloromethane, cyclopentane, MTBE, acetone, chloroform, methanol, tetrahydrofuran, n-hexane, trifluoroacetic acid, ethyl acetate, ethanol, benzene, cyclohexane, acetonitrile, isopropanol, tert-butanol, ethylene dichloride, n-propanol, heptane, 2-butanol, dioxane, isobutanol, toluene, pyridine, and n-butanol.

Additionally or alternatively, the liquid solution may comprise one or more inorganic solvents, preferably selected from water, carbon disulfide, carbon tetrachloride, hydrochloric acid, formic acid, and acetic acid.

In order to condense the evaporated one or more solvents, it is necessary to reach a sufficiently high degree of saturation of the solvent in the atmosphere. It has been shown experimentally that such high degrees of saturation are difficult to be reached when the vapors from evaporating the one or more solvents are drawn away using an active gas flow, e.g. by using an extractor fan. Therefore, preferably, the vapors are passively drawn away from the container.

Preferably, the driving force for a flow of evaporated solvent from the container towards the cold surface is provided by temperature differences between the evaporated solvent above the open container and the cold surface below the container. Without wishing to be bound by theory, the inventors believe that condensation of the evaporated solvents results in a pressure drop that acts as the driving force for a gas flow away from the container and towards the cold surface.

In preferred embodiments, the method does not rely on an extractor fan or other active methods for directing the evaporated solvent flow away from the container.

The evaporation chamber may be kept under subatmospheric absolute pressures, in order to promote evaporation and decrease the boiling point of the one or more solvents. For instance, the evaporation chamber may be kept at an absolute pressure of 100 kPa or lower, such as 50 kPa or lower, or 30 kPa or lower, or even 15 kPa or lower.

Depending on the nature of the one or more solvents and their respective boiling points and/or vapor pressures, the temperature to which the container comprising the liquid solution is depends on the solvent to be evaporated. If the container with the liquid solution is heated is too high temperatures, degradation or evaporation of the solute may occur. Another downside of heating at too high temperatures is that explosion risk can arise. Therefore, depending on the solvents present in the solution, the container comprising the liquid solution may be heated to a temperature at least 10 °C below the autoignition temperature of the solvent with the lowest autoignition temperature. On the other hand, when the temperature to which the container with the liquid solution is heated is too low, evaporation of the one or more solvents may proceed too slowly. In embodiments, the temperature to which the container comprising the liquid solution is heated is 30-150 °C, preferably 40-120 °C, such as 50-100 °C.

Heating can for instance be performed by providing one or more heated surfaces such as resistive heaters inside the evaporation chamber, and bringing the container in contact with the one or more heated surfaces. However, other ways of heating, such as bringing the surface in heat-exchanging contact with a heating fluid, microwave heating and/or infrared heating may also be employed.

Condensation at the one or more cold surfaces occurs when the temperature of the cold surface is low enough to reach oversaturation of the evaporated solvents (*i.e.*, referring to the condition where the partial pressure of the evaporated solvent is higher than the vapor pressure of that solvent near the cold surface). Preferably, the temperature of the one or more cold surfaces is at least 5 °C below the temperature of the heated container, preferably at least 10 °C below the temperature of the heated container, more preferably at least 20 °C below the temperature of the heated container, such as 20-80 °C below the temperature of the heated container.

The temperature of the one or more cold surfaces may also be defined relative to the boiling points of the one or more evaporated solvents. Preferably, the temperature of the one or more cold surfaces is at least 5 °C below the boiling point of the evaporated solvent having the lowest boiling point, preferably at least 10 °C below the boiling point of the evaporated solvent having the lowest boiling point, more preferably at least 20 °C below the boiling point of the evaporated solvent having the lowest boiling point, such as 20-80 °C below the boiling point of the evaporated solvent having the lowest boiling point.

If heating is of the container is performed by providing one or more heated surfaces, the cold surface may be at least 10 °C below the temperature of the heated surfaces, preferably at least 15 °C below the temperature of the heated surfaces, more preferably at least 25 °C below the temperature of the heated surfaces, such as 30-100 °C below the temperature of the heated surfaces.

The method according to the invention can be used to evaporate and recover part of the one or more solvents of the liquid solution or all of the one or more solvents of the liquid solution. If the method is for instance used for an analytical method in which the amount of solute in the liquid solution is to be determined, for instance the Röse-Gottlieb method for determining the fat content in milk, it is preferred to heat the liquid solution until all of the one or more solvents is evaporated from the solution.

After evaporating and recovering the one or more solvents, the container comprising a residue that is left after evaporation of the one or more solvents may be weighed, for instance in order to determine the amount of solute that remains in the container, and/or to assess whether evaporation of solvents is complete.

In order to use the method with enough throughput, it is preferred to evaporate the one or more solvents quickly. The amount of time needed to evaporate the one or more solvents depends *inter alia* on the amount of solvent that needs to be evaporated, the vapor pressure and the boiling temperature of the one or more solvents, and on the temperature to which the container and/or the liquid solution are heated. Preferably, heating of the solution is performed for 4 hours or less, more preferably 3 hours or less, even more preferably 2 hours or less. Preferably, the heating time is chosen as short as necessary to evaporate the desired amount of the one or more solvents, and will typically be 1 minute or longer, such as 5 minutes or longer. In embodiments, the solution is heated for 1-120 minutes, preferably 1-100 minutes, such as 10-60 minutes or 5-30 minutes.

The exact conditions used in the method may be optimized in order to make the results of the method consistent with known standard methods. For instance, the temperatures of the container and the cold surface, as well as the heating program may be optimized in terms of *e.g.* temperature ramps and duration of heating.

According to a second aspect of the invention, there is provided a system for recovery of evaporated solvent, the system comprising: - an evaporation unit configured for holding an open container comprising a solution and configured for heating said container; - a cooling unit; - an evaporation chamber which forms a fluid connection between the evaporation unit and the cooling unit; and - an outlet for collecting condensed solvent; wherein the cooling unit comprises one or more coolable surfaces facing the inside of the evaporation chamber, and wherein the one or more coolable surfaces are located inside the evaporation chamber such that, in use, flow of condensed solvent back into the open container is prevented.

Preferably, the system is suitable for performing the method as described herein.

In embodiments, the evaporation unit is closeable, meaning that apart from one or more outlets from which condensed solvent can be collected, the evaporation chamber can preferably be closed, *i.e.* made gastight, meaning that uncontrolled escaping of evaporated solvent does not occur when the evaporation unit is closed, leading to more effective solvent recovery.

In embodiments, the evaporation unit comprises a closeable opening for introducing and removing an open container comprising a liquid solution, such as a lid or a door.

Preferably, the cooling unit comprises a downward sloped surface configured to allow condensed solvent to flow towards the outlet. In this way, the condensed solvents can advantageously be collected using gravity, by letting the condensed solvents flow out of the evaporation chamber via the outlet. Preferably, this sloped surface is coolable, such that re-evaporation of condensed solvent in the evaporation chamber can be prevented.

The outlet for extracting condensed solvent is preferably located adjacent to a coolable surface, thereby preventing re-evaporation of the condensed solvent when the solvent flows towards the outlet. In preferred embodiments, the outlet itself is also coolable.

The condensed solvent may be collected in a container. Advantageously, the condensed solvent is collected in a cold trap, in order to minimize re-evaporation of condensed solvent.

The coolable surface is preferably placed such that (as explained above for the method according to the first aspect of the invention) in use, it does not extend to a location that is vertically above an opening of an open container that the system is configured to hold. The coolable surface may for instance be a wall of the container that in use is located below the open container. In embodiments, the coolable surface is in heat exchanging contact with a cooling fluid. The system may further comprise a cooling fluid chamber comprising an inlet and an outlet for introducing and removing cooling fluid from the cooling fluid chamber, which cooling fluid chamber is in heat-exchanging contact with the coolable surface.

Alternatively or additionally, the coolable surface may be the cold side of a thermoelectric cooler, such as a Peltier device.

In order to prevent unwanted condensation of solvents on other surfaces than the coolable surface, other surfaces inside the evaporation chamber may be heated. This may be especially useful for surfaces that, in use, are located above, more specifically vertically above the open container, because unwanted condensation on such surfaces can lead to an increased risk of condensed solvent flowing back into the container, which could lead to contamination and/or less efficient evaporation and solvent recovery. In case the evaporation unit comprises a closeable opening such as a lid or a door, the surface of that closeable opening facing the internal volume of the evaporation chamber may also be heated. Heating of such surfaces can for instance be performed by using a resistive heater, bringing the surface in heat-exchanging contact with a heating fluid, microwave heating and/or infrared heating.

The system and method according to the inventions are especially suitable for small amounts of solution. If the amount of solution is too large, evaporation of solvent may a long time, because the heatable surface could become too small relative to the total volume of the solution. Preferably, the open container contains an amount of solution of 500 mL or less, more preferably 300 mL or less, even more preferably 200 mL or less, such as 10-150 mL.

Preferably, in order to readily reach a saturated vapor of evaporated solvent inside the evaporation chamber close to the cold surface, the volume of evaporation chamber should not be too large compared to the amount of solution. Therefore, in embodiments, the evaporation chamber has an internal volume of 2.0 L or less, preferably 1.0 L or less, such as 500 mL or less.

In embodiments, the method is performed in parallel on multiple samples at the same time, in order to increase efficiency. Multiple samples can be run in the same evaporation chamber, and/or in separate evaporation chambers. Therefore, the system may also comprise multiple evaporation chambers, each of the evaporation chambers comprising one or more samples. If the system is configured to run multiple samples in the same evaporation chamber, the evaporation chamber may, depending on the number of samples, for instance have an internal volume of 20.0 L or less, such as 5.0 L or less, such as 200 mL-4.0 L.

Because of the flammability of some solvents, the system is preferably fireproof and explosion-proof. For instance, this can may be ensured by using a heating system that complies with IEC/IEEE 60079-30-1. Other measures include configuring the system such that the maximum temperature in the evaporation chamber does not exceed the autoignition temperature of the one or solvents, and/or by choosing materials that prevent the formation of sparks.

In embodiments, the system can be used to evaporate and recover solvents from multiple containers comprising a liquid solution in parallel. The system may for instance be suitable for receiving multiple samples (*i.e.*, containers comprising a liquid solution) in a single evaporation unit. However, when multiple samples are together in a single unit, there is an increased risk of cross-contamination of the samples. Therefore, in order to run multiple samples in parallel, the system preferably comprises multiple evaporation chambers, each evaporation chamber forming a fluid connection between its own evaporation unit, cooling unit and outlet. These system is also preferably modular, meaning that the system can be easily expanded and/or reduced based by adding or removing units, depending on the workload.

In cases where the coolable surface of each of the multiple chambers is in heat exchanging contact with a separate cooling fluid chamber comprising an inlet and an outlet for introducing and removing cooling fluid from the cooling fluid chamber, the inlets and outlets for cooling fluid of the respective cooling fluid chambers may be connected in parallel. Alternatively, the inlets and outlets may be connected in series, wherein the outlet of each cooling fluid chamber is connected to the inlet of another cooling fluid chamber.

In other embodiments, the coolable surfaces of each of the multiple closeable evaporation chambers may be connected to a single cooling fluid chamber.

In preferred embodiments, the method according to the first aspect of the invention is performed using a system according to the second aspect of the invention.

In figure 2 a schematic representation of the principle of operation of the method and system according to the invention is shown.

In evaporation chamber (1), open container (3) containing liquid solution (4) is heated using heated surface (2), leading to the formation of solvent vapor above the container. Below the container, there is a cold surface (6), onto which evaporated solvent condenses (7) when the critical vapor pressure is reached. Condensation of the evaporated solvent results in a pressure drop which provides the driving force for transport of the evaporated solvent (5) away from the container. The slope of cold surface (6) helps condensed solvent to flow towards outlet (9) under the influence of gravity.

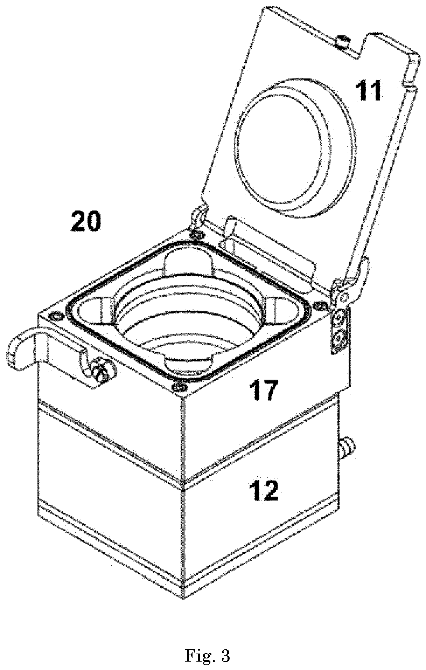

In figure 3, an example of solvent recovery system (20) is shown, showing cooling unit (12), and evaporation unit (17), comprising closeable lid (11) through which a container can be inserted into the system.

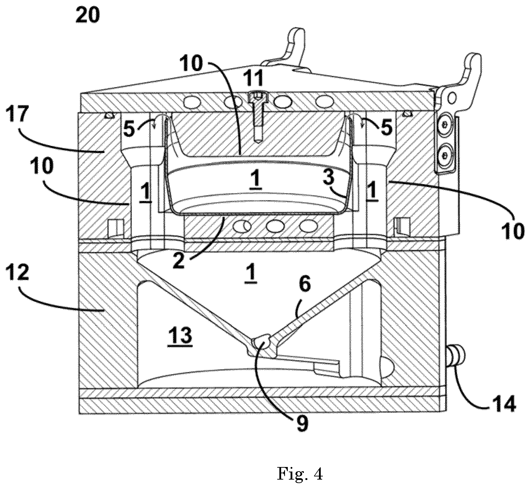

In figure 4, a cross-section of solvent recovery system (20) is shown. Evaporation unit (17) comprises heatable surface (2), and is configured to hold open container (3). Evaporation chamber (1) forms a fluid connection between evaporation unit (17) and cooling unit (12). Coolable surface (6) slopes downwards to outlet (9). Other internal surfaces (10) of evaporation chamber (1) such as the internal sidewalls and the inside surface of closeable lid (11) may also be heatable, such that unwanted condensation of solvent on these surfaces can be prevented. Coolable surface (6) is in heat exchanging contact with cooling fluid chamber (13) having an inlet (14) for introducing and an outlet (not shown) for removing for cooling fluid.

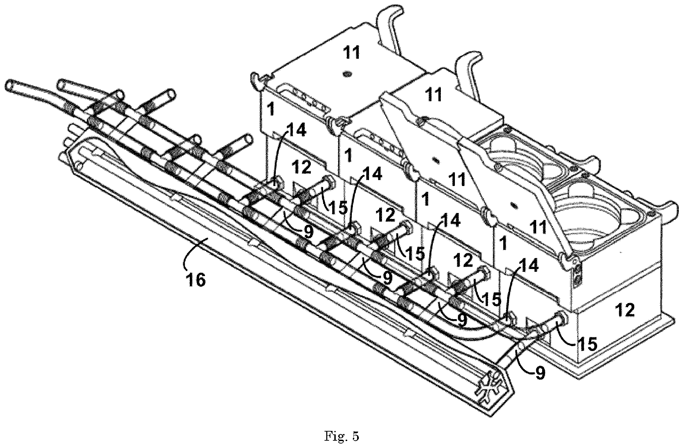

Figure 5 shows a modular solvent recovery system comprising four evaporation units (17) and four cooling units (12). Each cooling unit has an inlet (14) and an outlet (15) for introducing and removing cooling fluid. The inlets (14) and the outlets (15), respectively, may be connected with each other in parallel or in series. The outlets (9) for collecting condensed solvent of each of the chambers may also be connected in parallel. Condensed solvent can be collected in cold trap (16).

The invention has been described by reference to various embodiments, and methods. The skilled person understands that features of various embodiments and methods can be combined with each other.

All references cited herein are hereby completely incorporated by reference to the same extent as if each reference were individually and specifically indicated to be incorporated by reference and were set forth in its entirety herein.

The use of the terms "a" and "an" and "the" and similar referents in the context of describing the invention (especially in the context of the claims) are to be construed to cover both the singular and the plural, unless otherwise indicated herein or clearly contradicted by context. The terms "comprising", "having", "including" and "containing" are to be construed as open-ended terms (*i.e.*, meaning "including, but not limited to") unless otherwise noted. Recitation of ranges of values herein is merely intended to serve as a shorthand method of referring individually to each separate value falling within the range, unless otherwise indicated herein, and each separate value is incorporated into the specification as if it were individually recited herein. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention. For the purpose of the description and of the appended claims, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

When referring to a noun in the singular, the plural is meant to be included, or it follows from the context that it should refer to the singular only.

Preferred embodiments of this invention are described herein. Variation of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject-matter recited in the claims appended hereto as permitted by applicable law. Moreover, any combination of the above-described elements in all possible variations thereof is encompassed by the invention unless otherwise indicated herein or otherwise clearly contradicted by context. The claims are to be construed to include alternative embodiments to the extent permitted by the prior art.

For the purpose of clarity and a concise description, features are described herein as part of the same or separate embodiments, however, it will be appreciated that the scope of the invention may include embodiments having combinations of all or some of the features described.

### EXAMPLES

### Example 1.

An stainless steel cup that is open at the top containing 0.5 g of milk fat, and 74 g of solvent (39 g of n-pentane and 35 g of diethyl ether) was placed in an evaporation unit which was closed using a lid and the inside of the evaporation unit was heated to 75-80 °C. The inside of the evaporation unit was kept at this temperature for 30 minutes. Below the open container in the evaporation chamber, a cold surface having a surface temperature of 7 °C was provided by providing water to a cooling fluid chamber that was in heat-exchanging contact with the cold surface.

After 30 minutes, all solvent had evaporated from the stainless steel cup and only milk fat remained. From the outlet, 58 g of solvent was collected, resulting in a solvent recovery yield of 91 %.

## Claims

1. Method for recovery of evaporated solvent, comprising the steps of:
- providing in an evaporation chamber an open container comprising a liquid solution, the solution comprising one or more solvents;
- heating the solution, thereby evaporating one or more of the solvents;
- providing a cold surface inside the evaporation chamber, allowing the evaporated one or more solvents to condense on the cold surface, wherein the cold surface is located inside the evaporation chamber such that flow of condensed solvent back into the open container is prohibited; and
- collecting the condensed solvent.

2. Method according to claim 1, wherein the one or more solvents are organic solvents, preferably having a standard boiling point of 20-100 °C, more preferably 30-80 °C.

3. Method according to claim 1 or 2, wherein the solution further comprises dairy fat, preferably milk fat.

4. Method according to any one of claims 1-3, wherein the driving force for a flow of evaporated solvent from the container towards the cold surface is provided by the pressure drop arising from condensation of the one or more solvents on the cold surface.

5. Method according to any one of claims 1-4, wherein the container comprising the liquid solution is heated to a temperature of 30-120 °C, preferably 40-80 °C.

6. Method according to any one of claims 1-5, wherein the temperature of the cold surface is at least 5 °C below the temperature of the heated container, preferably at least 10 °C below the temperature of the heated container, more preferably at least 20 °C below the temperature of the heated container.

7. Method according to any one of claims 1-6, followed by weighing the container comprising a residue that is left after evaporation of the one or more solvents.

8. Method according to any one of claims 1-7, further comprising heating the internal surfaces of the evaporation chamber other than the cold surface, thereby preventing unwanted condensation on surfaces other than the cold surface.

9. Method according to any one of claims 1-8, performed using a system according to any one of claims 10-14.

10. System for recovery of evaporated solvent, the system comprising:
- an evaporation unit configured for holding an open container comprising a solution and configured for heating said container;
- a cooling unit;
- an evaporation chamber which forms a fluid connection between the evaporation unit and the cooling unit; and
- an outlet for collecting condensed solvent;
wherein the cooling unit comprises one or more coolable surfaces facing the inside of the evaporation chamber, and wherein the one or more coolable surfaces are located inside the evaporation chamber such that, in use, flow of condensed solvent back into the open container is prevented.

11. System according to claim 10, wherein the evaporation unit comprises a closeable opening for introducing and removing an open container comprising a liquid solution.

12. System according to claim 10 or 11, wherein the cooling unit comprises a sloped surface configured to allow condensed solvent to flow towards the outlet, preferably wherein in use the coolable surface is sloped downwards towards the outlet.

13. System according to any one of claims 10-12, wherein the coolable surface is configured to be in heat exchanging contact with a cooling fluid, preferably wherein the system comprises a cooling fluid chamber comprising an inlet and an outlet for introducing and removing cooling fluid.

14. System according to any one of claims 10-13, wherein the evaporation chamber has an internal volume of 1.0 L or less, preferably 500 mL or less.
